# EUROPÄISCHE PATENTSCHRIFT

(11) **EP 2 604 453 B1**
(45) Veröffentlichungstag und Bekanntmachung des Hinweises auf die Patenterteilung: **06.06.2018**
(21) Anmeldenummer: 11193523.5
(22) Anmeldetag: 14.12.2011
(51) Int. Cl.: B60G 11/08, B60G 11/10, B60G 3/28, B60G 11/42, B60G 21/02, B60G 21/05, F16F 1/30

(54) **Querblattfeder mit einem starr verbundenen elastischen Verbindungskörper für ein Kraftfahrzeug**
Transverse leaf spring with a rigidly connected elastic body for a vehicle
Ressort à lame transversal doté d'un corps de liaison élastique relié de manière rigide pour un véhicule automobile

(43) Veröffentlichungstag der Anmeldung: 19.06.2013
(73) Patentinhaber: Magna Steyr Fahrzeugtechnik AG & Co KG, 8041 Graz (AT)
(72) Erfinder: Lindtner, Werner, 8010 Graz (AT)
(74) Vertreter: Zangger, Bernd

(56) Entgegenhaltungen:
- WO-A1-86/02886
- DE-A1- 1 455 587
- DE-A1- 1 805 238
- DE-B- 1 276 466
- DE-C- 597 010
- DE-C- 937 391
- GB-A- 840 782
- JP-A- 9 136 521
- US-A- 2 973 951

## Beschreibung

### TECHNISCHES GEBIET

Die Erfindung betrifft eine Anordnung, umfassend eine Blattfeder die quer zur Längsachse eines Kraftfahrzeugs angeordnet ist und einen damit starr verbundenen elastischen Verbindungskörper, welcher Mittel für eine starre Verbindung zu einem Fahrzeugrahmen umfasst. Weiterhin betrifft die Erfindung ein Kraftfahrzeug mit einem Rahmen und einer Blattfeder zum Federn wenigstens zweier Räder des Kraftfahrzeugs.

### STAND DER TECHNIK

Generell sind elastische Verbindungskörper mit zwei gegeneinander geneigten und voneinander beabstandete Abschnitte als Maschinenlager zur Lagerung stationär montierter Maschinen bekannt. Eine Anordnung allgemein eines elastischen Verbindungskörpers zwischen einer Blattfeder und einem Rahmen eines Kraftfahrzeugs ist ebenfalls prinzipiell bekannt. Der elastische Verbindungskörper dient bei bekannten Kraftfahrzeugen der Übertragung der Vertikalkomponente der auf die Blattfeder einwirkenden Radkräfte auf den Fahrzeugrahmen. Darüber hinaus hat der Verbindungskörper eine dämpfende und geräuschreduzierende Funktion, da damit auch der direkte Kontakt zwischen Blattfeder und Rahmen vermieden wird. Insbesondere bei dynamischer auf das Fahrzeug einwirkender Belastung verhält sich das Fahrzeug dadurch insgesamt ruhiger. Zudem erlaubt der Verbindungskörper eine schleifende Relativbewegung, konkret eine Drehung und/oder Verschiebung, zwischen der Blattfeder und dem Rahmen, welche bei einer Biegung der Blattfeder entsteht. Beispiele für eine solche Anordnung sind in der DE 937 391 C, der DE 35 41 919 A1, der DE 10 2009/028893 A1 und der JP 04059406 A offenbart. Nachteilig an den bekannten Systemen ist unter anderem die schleifende und damit abrasive Relativbewegung zwischen Blattfeder, Verbindungskörper und Rahmen. Die Lebensdauer einer solchen Anordnung ist daher sehr eingeschränkt.

Weiterhin offenbart die DE 496 607 eine Anordnung mit einer Blattfeder und elastischen Verbindungskörpern, bei welcher die Verbindungskörper fix mit der Blattfeder und dem Fahrzeugrahmen verbundenen sind. Allerdings betrifft die DE 496 607 keine Querblattfeder und geht sie nicht näher darauf ein, wie eine Relativbewegung zwischen Blattfeder und Rahmen konkret ermöglicht werden soll. Eine horizontale Längenänderung zwischen mehreren Verbindungskörpern, wie sie beim Federn der Blattfeder entsteht, kann durch die Lagefixierung der Verbindungskörper nicht kompensiert werden. Auch kann die beim Federn der Blattfeder entstehende Relativdrehung zum Rahmen kaum ausgeglichen werden, da die vergleichsweise flachen Verbindungskörper bei einer solchen Bewegung auf Druck belastet werden und daher dementsprechend steif sind. Insgesamt setzt die in der DE 496 607 offenbarte Anordnung einer Relativbewegung zwischen Blattfeder und Rahmen somit erheblichen Widerstand entgegen.

### OFFENBARUNG DER ERFINDUNG

Die Aufgabe der Erfindung ist es daher, eine verbesserte Anordnung anzugeben, welche eine quer zur Längsachse des Fahrzeugs angeordnete Blattfeder und einen mit der Blattfeder starr verbundenen elastischen Verbindungskörper umfasst. Desweiteren soll ein verbessertes Kraftfahrzeug mit einem Rahmen und einer derart angeordneten Blattfeder zum Federn wenigstens zweier Räder des Kraftfahrzeugs angegeben werden.

Die Aufgabe der Erfindung wird durch eine Anordnung gemäß Anspruch 1 gelöst. Die Aufgabe der Erfindung wird weiterhin mit einem Kraftfahrzeug gemäß Anspruch 14 gelöst. Vorteilhaft ist es dabei, wenn die geneigten Abschnitte durch die beiden Schenkel eines Y-förmigen Körpers gebildet sind. Dadurch, dass die beiden geneigten Abschnitte auf einem Y-förmigen Körper angeordnet sind, weist der elastische Verbindungskörper nur wenige Teile auf oder besteht in einer besonderen Ausführung überhaupt nur aus dem Y-förmigen Körper. Die Montage des elastischen Verbindungskörpers zwischen Rahmen und Blattfeder eines Fahrzeugs gestaltet sich daher denkbar einfach. Beispiele für einen elastischen Verbindungskörper der eingangs genannten Art sind in der US 2 973 951 A, der JP 9 136521 A, der GB 840 782 A, der DE 18 05 238 A1, und der DE 1455 587 A1 offenbart. Durch die besondere Ausgestaltung des Verbindungskörpers ist dieser gegenüber einer linearen Stauchung oder Dehnung in allen drei Achsen relativ steif, wohingegen eine Verdrehung der Verbindung zur Blattfeder hin gegenüber der Verbindung zum Rahmen hin relativ leicht möglich ist. Dies unter anderem deswegen, weil der Verbindungskörper bei der genannten Verdrehung vorwiegend auf Schub belastet ist. Auf diese Weise kann der der elastische Verbindungskörper starr mit dem Rahmen und starr mit der Blattfeder verbunden sein, ermöglicht aber dennoch eine Drehbewegung zwischen der Verbindung des elastischen Verbindungskörpers zum Rahmen hin und der Verbindung des elastischen Verbindungskörpers zur Blattfeder hin, so wie sie beim Federn der Blattfeder entsteht, beziehungsweise setzt dieser nur geringen Widerstand entgegen. Sind die genannten Abschnitte gegenüber einer Längsachse der Blattfeder nur wenig geneigt, so resultiert eine hohe Steifigkeit in Richtung der Längsachse der Blattfeder und eine geringe quer dazu. Sind die Abschnitte gegenüber einer Längsachse der Blattfeder stark geneigt, so ist es genau umgekehrt.

Ein weiterer Vorteil der Feder-Anordnung besteht darin, dass die Relativbewegung zwischen Blattfeder und Rahmen durch innere Verformung des elastischen Verbindungskörpers ermöglicht wird. Eine schleifende und damit abrasive Relativbewegung zwischen Blattfeder, Verbindungskörper und Rahmen erfolgt dabei nicht, was eine lange Lebensdauer der offenbarten Feder-Anordnung begünstigt.

Weitere vorteilhafte Ausgestaltungen und Weiterbildungen der Erfindung ergeben sich nun aus den Unteransprüchen sowie aus der Beschreibung in Zusammenschau mit den Figuren.

Vorteilhaft ist es, wenn die geneigten Abschnitte durch zwei gesonderte Körper mit gegeneinander geneigten Achsen gebildet sind, weil die genannten gesonderten Körper relativ einfach gestaltet sein können und in einer vorteilhaften Ausführungsform überhaupt identisch sind.

Vorteilhaft ist es, wenn die gesonderten Körper auf gegenüber der Blattfeder geneigten Abschnitten eines plattenförmigen Trägers angeordnet sind. Dadurch braucht die Blattfeder nicht besonders ausgestaltet sein, sondern die Neigung der genannten gesonderten Körper wird durch den plattenförmigen Träger besorgt. Die gesonderten Körper können dann insbesondere auch einen rechteckigen Querschnitt aufweisen.

Günstig ist es, wenn der Y-förmige Körper beziehungsweise die gesonderten Körper prismatisch sind. Dadurch können diese besonders leicht hergestellt werden, beispielsweise durch Ablängen eines entsprechenden Stangenmaterials. Auf diese Weise können der Y-förmige Körper beziehungsweise die gesonderten Körper auch besonders leicht an verschieden breite Blattfedern angepasst werden.

Günstig ist es, wenn der elastische Verbindungskörper wenigstens teilweise aus Gummi oder einem Elastomer besteht. Dadurch können die Verformungseigenschaften wie Elastizitätsmodul und Dämpfung in weiten Grenzen eingestellt werden.

Vorteilhaft ist es, wenn der elastische Verbindungskörper mit der Blattfeder verklebt oder auf diese aufvulkanisiert ist und/oder die Mittel für eine starre Verbindung zum Fahrzeugrahmen hin durch eine Fläche gebildet sind, welche für eine Verklebung mit dem Fahrzeugrahmen oder Aufvulkanisierung auf den Fahrzeugrahmen vorgesehen ist. Auf diese Weise kann die Blattfeder besonders leicht mit der Blattfeder und/oder dem Fahrzeugrahmen verbunden werden, da hierfür keine aufwändige Konstruktion zur Befestigung derselben vonnöten ist.

Vorteilhaft ist es aber auch, wenn der elastische Verbindungskörper mit der Blattfeder verschraubt ist und/oder die Mittel für eine starre Verbindung zum Fahrzeugrahmen hin durch eine steife Platte gebildet ist, welche starr mit den geneigten Abschnitte verbunden und für eine Verschraubung mit dem Fahrzeugrahmen vorgesehen ist. Auf diese Weise wird der Austausch von Komponenten begünstigt, welche im Laufe der Zeit defekt werden können. Beispielsweise kann ein Verbindungskörper leicht ausgetauscht werden, wenn dieser lösbar mit dem Fahrzeugrahmen und der Blattfeder verbunden ist. Natürlich ist es auch denkbar, dass der Verbindungskörper mit der Blattfeder/dem Fahrzeugrahmen lösbar und mit dem Fahrzeugrahmen/der Blattfeder unlösbar verbunden ist.

Vorteilhaft ist es, wenn die Abschnitte des zumindest einen elastischen Verbindungskörpers gegenüber einer neutralen Faser der Blattfeder verschieden geneigt sind. Dadurch wird der elastische Verbindungskörper in einer Längsachse und einer Hochachse der Blattfeder relativ steif.

Vorteilhaft ist es, wenn ein Drehpunkt, um welchen die Verbindung des zumindest einen Verbindungskörpers zum Fahrzeugrahmen hin und die Verbindung desselben zur Blattfeder hin beim Federn der Blattfeder gedreht werden, beabstandet zu einer neutralen Faser der Blattfeder angeordnet ist. Besonders vorteilhaft ist es in diesem Zusammenhang, wenn der Drehpunkt auf der dem zumindest einen Verbindungskörpers zugewandten Seite der neutralen Faser der Blattfeder angeordnet ist, insbesondere auf der Krümmungsaußenseite der Blattfeder. Dadurch kann die horizontale Längenänderung zwischen den Verbindungen mehrerer Verbindungskörper zur Blattfeder beim Federn derselben ganz oder wenigstens teilweise kompensiert werden.

Günstig ist es, wenn ein Drehpunkt, um welchen die Verbindung des zumindest einen Verbindungskörpers zum Fahrzeugrahmen hin und die Verbindung desselben zur Blattfeder hin beim Federn der Blattfeder gedreht werden, in einer neutralen Faser der Blattfeder angeordnet ist. Dadurch kann die Steifigkeit der Anordnung, umfassend die Blattfeder und den elastischen Verbindungskörper erhöht werden, ohne die Steifigkeit der Blattfeder zu erhöhen. Durch die Anordnung des Drehpunktes in der neutralen Faser der Blattfeder wird einer horizontalen Längenänderung zwischen den Verbindungen mehrerer Verbindungskörper zur Blattfeder beim Federn derselben nämlich entgegengewirkt. Die Anordnung ist somit insgesamt steifer.

Günstig ist es, wenn die Torsionsfederkonstante eines elastischen Verbindungskörpers um eine durch den Drehpunkt und in einer Querrichtung zur Blattfeder verlaufenden Achse 5 Nm/° beträgt. Dadurch ist eine Verdrehung der Verbindung zur Blattfeder hin gegenüber der Verbindung zum Rahmen hin, so wie sie beim Federn der Blattfeder entsteht, relativ leicht möglich. Der elastische Verbindungskörper wird beim Federn der Blattfeder daher nur wenig beansprucht, wodurch eine lange Lebensdauer desselben resultiert.

Vorzugsweise umfasst die Feder-Anordnung zumindest zwei im Bezug auf die neutrale Faser der Blattfeder gegenüber liegend angeordnete elastische Verbindungskörper. Die entstehende Anordnung ist sowohl relativ steif aber auch ausfallsicher, denn bei einem Bruch eines Verbindungskörpers wird dessen Funktion durch den anderen Verbindungskörper teilweise übernommen.

Eine vorteilhafte Feder-Anordnung umfasst zumindest eine elastische Lagesicherung, welche im Bezug auf die neutrale Faser der Blattfeder gegenüber dem zumindest einen elastischen Verbindungskörper angeordnet ist. Auf diese Weise wird verhindert, dass sich die Blattfeder unkontrolliert bewegt, wenn ein elastischer Verbindungskörper zu Bruch gehen sollte. Die Blattfeder wird in diesem Fall in Position gehalten. Erfindungsgemäß ist die Blattfeder quer zur Längsachse des Fahrzeugs angeordnet und für die Federung von wenigstens je einem Rad an je einem Ende der Blattfeder vorgesehen ist. Auf diese Weise kann die Anzahl der für den Aufbau eines Fahrzeugs nötigen Komponenten reduziert werden, da eine einzige Blattfeder für die Federung von zwei Rädern vorgesehen ist. Der Montage des Kraftfahrzeugs wird damit deutlich vereinfacht.

Vorteilhaft ist es, wenn die Anordnung, umfassend die Blattfeder und die elastischen Verbindungskörper, konstruktiv derart in das Kraftfahrzeug eingebaut ist, dass sie in einer Längsrichtung und/oder Querrichtung des Fahrzeugs wirkende Kräfte aufnimmt. Besonders vorteilhaft ist es in diesem Zusammenhang, wenn die Federkonstante der mit der Blattfeder verbundenen elastischen Verbindungskörper in Summe (d.h. aller zwischen Rahmen und Blattfeder angeordneter und an der Kraftübertragung beteiligter Verbindungskörper) 200 N/mm in einer Längsrichtung des Fahrzeugs und/oder 3000 N/mm in einer Querrichtung des Fahrzeugs und/oder 1000 N/mm in vertikaler Richtung beträgt. Durch die besondere Ausgestaltung des Verbindungskörpers ist dieser gegenüber einer linearen Stauchung oder Dehnung in allen drei Achsen relativ steif, wohingegen eine Verdrehung der Verbindung zur Blattfeder hin gegenüber der Verbindung zum Rahmen hin relativ leicht möglich ist. Die Blattfeder kann auf diese Weise auch die Aufgabe eines unteren oder oberen Querbeziehungsweise Dreieckslenkers, eines Stabilisators oder bei Einsatz an einer Hinterachse auch eines Spurlenkers übernehmen. Die genannten Bauteile können dadurch entfallen, wodurch der Aufbau eines Fahrzeugs besonders einfach wird.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: ein erstes Beispiel für einen elastischen Verbindungskörper zwischen einer Blattfeder und einem Rahmen eines Fahrzeugs;
- Figur 2: eine Achse eines Fahrzeugs mit einem elastischen Verbindungskörper und einer Blattfeder in Grund- und Aufriss;
- Figur 3: ein Beispiel für einen elastischen Verbindungskörper mit zwei gesonderten Körpern.
- Figur 4: einen Ausschnitt aus Fig. 3 bei Verdrehung des elastischen Verbindungskörpers.
- Figur 5: ein weiteres Beispiel für einen elastischen Verbindungskörper mit einem Drehpunkt in der neutralen Faser der Blattfeder;
- Figur 6: eine Anordnung mit einander gegenüber liegenden elastischen Verbindungskörpern und
- Figur 7: eine Feder-Anordnung mit einer Lagesicherung.

### DETAILIERTE BESCHREIBUNG DER ERFINDUNG

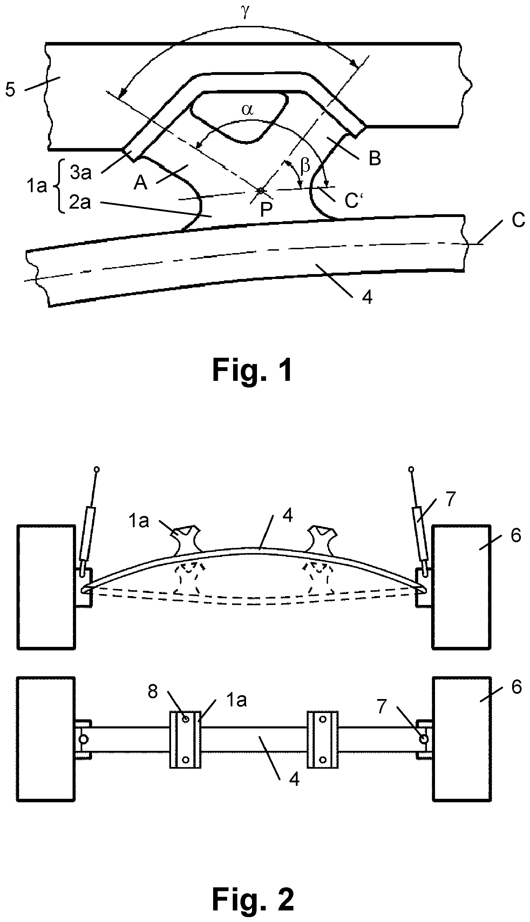

Fig. 1 zeigt einen elastischen Verbindungskörper 1a, welcher zwischen einer Blattfeder 4 eines Kraftfahrzeugs und einem Fahrzeugrahmen 5 desselben angeordnet ist. Der elastische Verbindungskörper 1a umfasst zwei gegeneinander geneigte Abschnitte A, B, welche in diesem Beispiel durch die beiden Schenkel eines Y-förmigen Körpers 2a gebildet sind. Der Y-förmige Körper 2a kann beispielsweise aus Gummi oder aus einem Elastomer bestehen.

Weiterhin umfasst der elastische Verbindungskörper 1a Mittel für eine starre Verbindung zur Blattfeder 4 hin und Mittel für eine starre Verbindung zum Fahrzeugrahmen 5 hin. Konkret sind die Mittel für die starre Verbindung zur Blattfeder 4 hin durch eine Fläche gebildet, welche für eine Verklebung mit der Blattfeder 4 oder Aufvulkanisierung auf die Blattfeder 4 vorgesehen ist. Die Mittel für die starre Verbindung zum Fahrzeugrahmen 5 hin sind durch eine steife Platte 3a gebildet, welche starr mit den geneigten Abschnitte A, B verbunden und für eine Verschraubung mit dem Fahrzeugrahmen 5 vorgesehen ist. Das heißt, der elastische Verbindungskörper 1a ist in diesem Beispiel mit der Blattfeder 4 unlösbar und mit dem Fahrzeugrahmen 5 lösbar verbunden. Die steife Platte 3a kann beispielsweise aus Metall oder faserverstärktem Kunststoff bestehen.

Denkbar wäre natürlich auch, dass der elastische Verbindungskörper 1a mit der Blattfeder 4 lösbar verbunden ist, insbesondere mit dieser verschraubt ist. Die Mittel für die starre Verbindung zur Blattfeder 4 hin sind dann durch eine steife Platte gebildet, welche starr mit den geneigten Abschnitte A, B verbunden und für eine Verschraubung mit der Blattfeder 4 vorgesehen ist.

Denkbar wäre zudem, dass der elastische Verbindungskörper 1a mit dem Fahrzeugrahmen 5 unlösbar verbunden ist, insbesondere mit diesem verklebt ist. Die Mittel für die starre Verbindung zum Fahrzeugrahmen 5 hin sind dann durch eine Fläche gebildet, welche für eine Verklebung mit dem Fahrzeugrahmen 5 vorgesehen ist. In einer bevorzugten Ausführungsform kann die steife Platte 3a auch weggelassen werden. Der Y-förmige Körper 2a kann dann direkt auf Fahrzeugrahmen 5 aufvulkanisiert oder mit diesem verklebt sein. Die Mittel für die starre Verbindung zum Fahrzeugrahmen 5 hin sind dann ebenfalls durch eine Fläche gebildet, welche für eine Verklebung mit dem Fahrzeugrahmen 5 oder Aufvulkanisierung auf den Fahrzeugrahmen 5 vorgesehen ist.

Fig. 2 zeigt einen Ausschnitt aus einem Kraftfahrzeug, konkret eine Achse desselben in Grund und Aufriss. Gut zu erkennen ist darin die Anordnung, umfassend die Blattfeder 4 und zwei mit der Blattfeder 4 starr verbundene elastischen Verbindungskörper 1a. Der Rahmen 5 des Kraftfahrzeugs (siehe Fig. 1), mit dem die elastischen Verbindungskörper 1a verbunden sind, ist der einfacheren Darstellung halber nicht gezeichnet. Die genannte Anordnung mit der Blattfeder 4 und den elastischen Verbindungskörpern 1a dient zum Federn zweier Räder 6 des Kraftfahrzeugs, welche an je einem Ende der Blattfeder 4 angeordnet sind. Die Blattfeder 4 ist dazu quer zur Längsachse des Fahrzeugs angeordnet. Zusätzlich sind in der Fig. 2 Stoßdämpfer 7 gezeigt, welche in an sich bekannter Weise die beim Federn entstehenden Schwingungen dämpfen.

Vorzugsweise ist die die Verbindungskörper 1a und die Blattfeder 4 umfassende Anordnung konstruktiv derart in das Kraftfahrzeug eingebaut ist, dass sie in einer Längsrichtung und/oder Querrichtung des Fahrzeugs wirkende Kräfte aufnimmt. In der Fig. 2 sind dazu Befestigungslöcher 8 in der Platte 3a angeordnet, mit deren Hilfe die elastischen Verbindungskörper 1a am Fahrzeugrahmen 5 befestigt werden. Dadurch wird die Blattfeder 4 in dem konkreten Beispiel sowohl in der Längsrichtung als auch in der Querrichtung des Fahrzeugs lagefixiert, beziehungsweise kann sich die Blattfeder 4 bei Belastung nur geringfügig in der Längsrichtung und/oder Querrichtung verschieben. Vorzugsweise beträgt die Federkonstante der mit der Blattfeder 4 verbundenen elastischen Verbindungskörper 1a in Summe (d.h. beider in der Fig. 2 dargestellter Verbindungskörper 1a) 200 N/mm in einer Längsrichtung des Fahrzeugs und/oder 3000 in N/mm einer Querrichtung des Fahrzeugs und/oder 1000 N/mm in vertikaler Richtung.

In der Fig. 2 ist strichliert dargestellt, wie sich in etwa die Blattfeder 4 und die elastischen Verbindungskörper 1a beim Federn verformen. Dadurch dass die Verbindungskörper 1a sowohl mit der Blattfeder 4 als auch mit dem Rahmen 5 starr verbunden sind, werden die Verbindung des Verbindungskörpers 1a zum Fahrzeugrahmen 5 hin und die Verbindung desselben zur Blattfeder 4 hin beim Federn der Blattfeder 4 gegeneinander um einen Punkt P verdreht, welcher in der Fig. 1 zu sehen ist. Wie dort leicht zu erkennen ist, ist der Drehpunkt P beabstandet zu einer neutralen Faser C der Blattfeder 4 angeordnet. Konkret befindet sich der Drehpunkt P auf der dem zumindest einen Verbindungskörpers 1a zugewandten Seite der neutralen Faser C der Blattfeder 4, hier auf der Krümmungsaußenseite der Blattfeder 4. Dadurch kann die horizontale Längenänderung zwischen den Verbindungen der Verbindungskörper 1a zur Blattfeder 4 ganz oder wenigstens teilweise kompensiert werden. Selbstverständlich wäre es auch möglich, den Drehpunkt P auf der Krümmungsinnenseite der Blattfeder 4 anzuordnen. Vorzugsweise beträgt die Torsionsfederkonstante des elastischen Verbindungskörpers 1a um eine durch den Drehpunkt P und in einer Querrichtung zur Blattfeder 4 verlaufenden Achse in beiden Fällen 5 Nm/°.

In der Fig. 1 ist zudem gut zu erkennen, dass die Abschnitte A, B des elastischen Verbindungskörpers 1a gegenüber der neutralen Faser C der Blattfeder 4 verschieden geneigt sind. Konkret ist der Abschnitt A mit dem Winkel α gegenüber der neutralen Faser C geneigt, der Abschnitt B mit dem Winkel β. Zur besseren Darstellung der Winkel α und β wurde die neutrale Faser C in der Fig. 1 auf die Faser C' parallel verschoben. In der Fig. 1 ist auch zu erkennen, dass die Abschnitte A, B um den Winkel γ gegeneinander geneigt sind.

Denkbar ist schließlich auch, dass der Bewegungsbereich der Blattfeder 4 durch Anschläge (in der Fig. 2 nicht dargestellt) limitiert wird, welche ebenfalls aus Gummi oder einem Elastomer, aber auch aus Metall respektive faserverstärktem Kunststoff bestehen können. Diese können die Bewegung in vertikaler Richtung und/oder in Längsrichtung und/oder in Querrichtung einschränken.

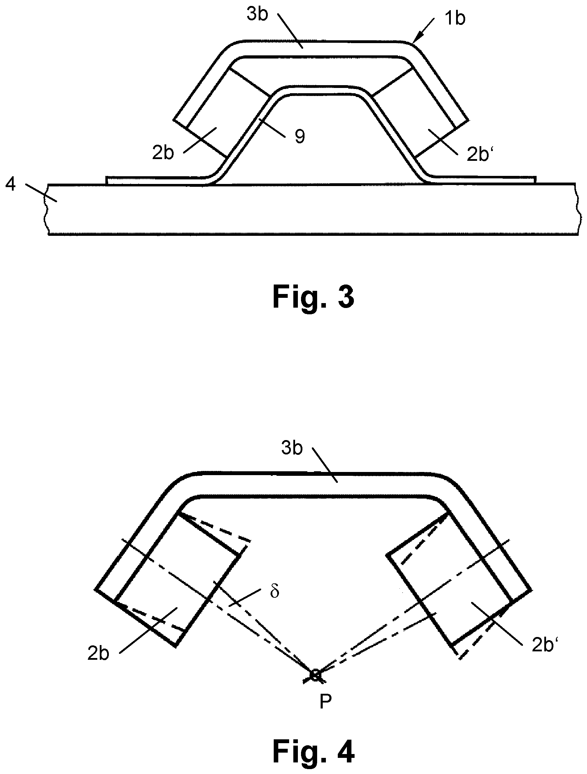

Fig. 3 zeigt nun einen Verbindungskörper 1b, bei dem die geneigten Abschnitte A, B durch zwei gesonderte Körper 2b, 2b' mit gegeneinander geneigten Achsen gebildet sind. In diesem Beispiel sind die gesonderten Körper 2b, 2b' auf gegenüber der Blattfeder 4 geneigten Abschnitten eines plattenförmigen Trägers 9 angeordnet, weisen einen rechteckigen Querschnitt auf und können aus Gummi oder einem Elastomer bestehen. Zudem sind die gesonderten Körper 2b, 2b' auch mit einer steifen Platte 3b verbunden. Die steife Platte 3b dient zum Befestigen des Verbindungskörpers 1b am Rahmen 5, der plattenförmige Träger 9 zum Befestigen des Verbindungskörpers 1b auf der Blattfeder 4. Der plattenförmige Träger 9 kann beispielsweise aus Metall oder faserverstärktem Kunststoff bestehen. Analog zur der in Fig. 1 dargestellten Anordnung ist auch hier der Entfall der steifen Platte 3b denkbar. Die beiden gesonderten Körper 2b, 2b' werden dann direkt mit dem Fahrzeugrahmen 5 verbunden.

Der Verbindungskörper 1b weist durch die besondere Konstruktion eine besonders hohe Steifigkeit in Längsrichtung der Blattfeder 4 (in der Fig. 3 horizontal von links nach rechts verlaufend) auf. Bei einer Biegung der Blattfeder 4 wird der plattenförmige Träger 9 gedehnt respektive gestaucht. Vorzugsweise übernimmt der plattenförmige Träger 9 nur in etwa 5% der Gesamtdehnung/stauchung. Die restlichen 95% werden dagegen von den Körpern 2b, 2b' übernommen. Ebenso verhält es sich bei einer Verdrehung der Verbindung des Trägers 9 zur Blattfeder 4 gegenüber der Verbindung der Platte 3b zum Rahmen 5. Auch hier wird der Hauptteil der bei der genannten Verdrehung entstehenden Deformation des elastischen Verbindungskörpers 1b von den Körpern 2b, 2b übernommen.

Fig. 4 zeigt, wie sich die Körper 2b, 2b' verhalten, wenn die Platte 3b gegenüber dem Träger 9 um den Winkel δ verdreht werden, so wie dies beim Federn der Blattfeder 4 passiert (siehe dazu auch die Fig. 2). In der Fig. 4 ist gut zu erkennen, dass die Körper 2b, 2b' verzerrt werden, wodurch sich eine Drehung der Platte 3b gegenüber dem Träger 9 um den Drehpunkt P ergibt.

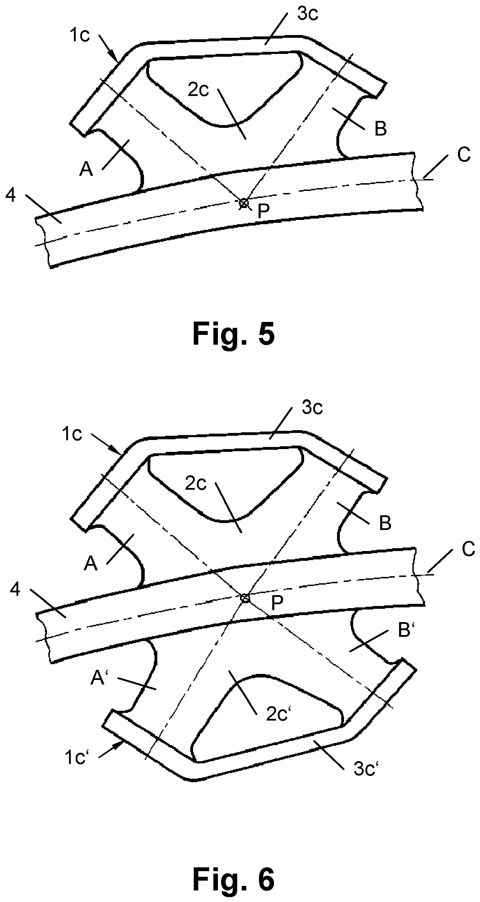

Fig. 5 zeigt nun einen elastischen Verbindungskörper 1c, welcher dem in Fig. 1 dargestellen Verbindungskörper 1a strukturell ähnlich ist. Allerdings ist ein Drehpunkt P, um welchen die Verbindung des Verbindungskörpers 1c zum Fahrzeugrahmen 5 hin und die Verbindung desselben zur Blattfeder 4 hin beim Federn der Blattfeder 4 gedreht werden, in einer neutralen Faser C der Blattfeder 4 angeordnet. Durch die Anordnung des Drehpunktes P in der neutralen Faser C der Blattfeder 4 wird einer horizontalen Längenänderung zwischen den Verbindungen mehrerer Verbindungskörper 1c zur Blattfeder 4 beim Federn derselben entgegengewirkt. Die Anordnung ist somit insgesamt steifer.

Fig. 6 zeigt eine Anordnung, welcher der in Fig. 5 dargestellten Anordnung sehr ähnlich ist. Im Unterschied dazu umfasst diese nun aber zwei im Bezug auf die neutrale Faser C der Blattfeder 4 gegenüber liegend angeordnete elastische Verbindungskörper 1c, 1c'. Die beiden Verbindungskörper 1c, 1c' können dabei auch als ein (geteilter) X-förmiger Verbindungskörper aufgefasst werden. Die entstehende Anordnung ist sowohl relativ steif aber auch ausfallsicher, denn bei einem Bruch eines Verbindungskörpers 1c/1c' wird dessen Funktion durch den anderen Verbindungskörper 1c'/1c teilweise übernommen.

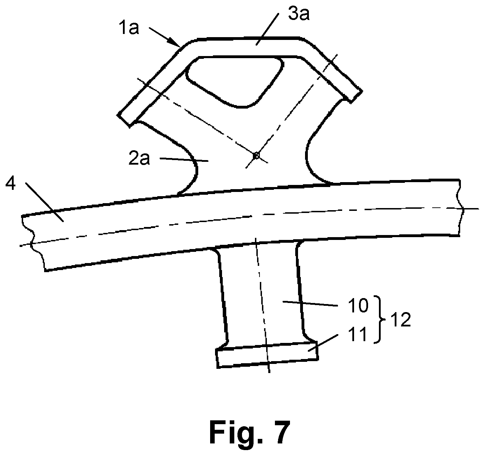

Fig.7 zeigt schließlich eine Anordnung, welcher der in Fig. 1 dargestellten Anordnung sehr ähnlich ist. Im Unterschied dazu umfasst diese nun aber eine Lagesicherung 12, welche im Bezug auf die neutrale Faser C der Blattfeder 4 gegenüber dem zumindest einen elastischen Verbindungskörper 1a angeordnet ist. Die Lagesicherung 12 umfasst in diesem Beispiel einen elastischen Körper 10 und eine damit starr verbundene steife Platte 11. Auf diese Weise wird verhindert, dass sich die Blattfeder 4 unkontrolliert bewegt, wenn der elastische Verbindungskörper 1a zu Bruch gehen sollte. Die Blattfeder 4 wird in diesem Fall durch die Lagesicherung 12 in Position gehalten.

Vorzugsweise sind die in den Figuren 1 bis 7 dargestellten elastischen Verbindungskörper 1a..1c prismatisch ausgebildet. Die Längsachse der Prismen verläuft dabei jeweils normal zur Zeichenebene (gilt in Fig. 2 für den Aufriss). Dadurch können elastischen Verbindungskörper 1a..1c beispielsweise durch Ablängen eines entsprechenden Stangenmaterials hergestellt und somit auch besonders leicht an verschieden breite Blattfedern 4 angepasst werden.

Abschließend wird festgehalten, dass die Bestandteile der Figuren ggf. nicht maßstabsgetreu dargestellt sind und dass die einzelnen in den Figuren dargestellten Varianten auch den Gegenstand einer unabhängigen Erfindung bilden können. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen. Weiterhin wird angemerkt, dass die einzelnen Federanordnungen auch mehr Komponenten als dargestellt oder auch weniger Komponenten als dargestellt aufweisen können, soweit der Gegenstand der beanspruchten Erfindung nicht erweitert wird.

## Patentansprüche

1. Anordnung, umfassend eine Blattfeder (4) eines Kraftfahrzeugs und einen damit starr verbundenen elastischen Verbindungskörper (1a..1c), welcher Mittel für eine starre Verbindung zu einem Fahrzeugrahmen (5) umfasst, **dadurch gekennzeichnet, dass** der elastische Verbindungskörper (1a..1c) zwei gegeneinander geneigte und wenigstens teilweise voneinander beabstandete Abschnitte (A, B) aufweist, wobei die Blattfeder (4) quer zur Längsachse des Fahrzeugs angeordnet und für die Federung von wenigstens je einem Rad (6) an je einem Ende der Blattfeder (4) vorgesehen ist.

2. Anordnung nach Anspruch 1, **dadurch gekennzeichnet, dass** die Abschnitte (A, B) des zumindest einen elastischen Verbindungskörpers (1a..1c) gegenüber einer neutralen Faser (C) der Blattfeder (4) verschieden geneigt sind.

3. Anordnung nach Anspruch 1 oder 2, **dadurch gekennzeichnet, dass** ein Drehpunkt (P), um welchen die Verbindung des zumindest einen Verbindungskörpers (1a..1c) zum Fahrzeugrahmen (5) hin und die Verbindung desselben zur Blattfeder (4) hin beim Federn der Blattfeder (4) gedreht werden, beabstandet zu einer neutralen Faser (C) der Blattfeder (4) angeordnet ist.

4. Anordnung nach Anspruch 3, **dadurch gekennzeichnet, dass** der Drehpunkt (P) auf der dem zumindest einen Verbindungskörpers (1a..1c) zugewandten Seite der neutralen Faser (C) der Blattfeder (4) angeordnet ist.

5. Anordnung nach Anspruch 1 oder 2, **dadurch gekennzeichnet, dass** ein Drehpunkt (P), um welchen die Verbindung des zumindest einen Verbindungskörpers (1a..1c) zum Fahrzeugrahmen (5) hin und die Verbindung desselben zur Blattfeder (4) hin beim Federn der Blattfeder (4) gedreht werden, in einer neutralen Faser (C) der Blattfeder (4) angeordnet ist.

6. Anordnung nach einem der Ansprüche 3 bis 5, **dadurch gekennzeichnet, dass** die Torsionsfederkonstante eines elastischen Verbindungskörpers (1a..1c) um eine durch den Drehpunkt (P) und in einer Querrichtung zur Blattfeder (4) verlaufenden Achse 5 Nm/° beträgt.

7. Anordnung nach einem der Ansprüche 1 bis 6, **dadurch gekennzeichnet, dass** die geneigten Abschnitte (A, B) des elastischen Verbindungskörpers (1a..1c) durch die beiden Schenkel eines Y-förmigen Körpers (2a, 2c) gebildet sind.

8. Anordnung nach einem der Ansprüche 1 bis 6, **dadurch gekennzeichnet, dass** die geneigten Abschnitte (A, B) des elastischen Verbindungskörpers durch zwei gesonderte Körper (2b, 2b') mit gegeneinander geneigten Achsen gebildet sind.

9. Anordnung nach Anspruch 8, **dadurch gekennzeichnet, dass** die gesonderten Körper (2b, 2b') auf gegenüber der Blattfeder (4) geneigten Abschnitten eines plattenförmigen Trägers (3b, 9) angeordnet sind.

10. Anordnung nach einem der Ansprüche 1 bis 9, **dadurch gekennzeichnet, dass**
- der elastische Verbindungskörper (1a..1c) mit der Blattfeder (4) verklebt oder auf diese aufvulkanisiert ist und/oder
- die Mittel für eine starre Verbindung zum Fahrzeugrahmen (5) hin durch eine Fläche gebildet sind, welche für eine Verklebung mit dem Fahrzeugrahmen (5) oder Aufvulkanisierung auf den Fahrzeugrahmen (5) vorgesehen ist.

11. Anordnung nach einem der Ansprüche 1 bis 10, **dadurch gekennzeichnet, dass**
- der elastische Verbindungskörper (1a..1c) mit der Blattfeder (4) verschraubt ist und/oder
- die Mittel für eine starre Verbindung zum Fahrzeugrahmen (5) hin durch eine steife Platte (3a, 3b) gebildet ist, welche starr mit den geneigten Abschnitte (A, B) verbunden und für eine Verschraubung mit dem Fahrzeugrahmen (5) vorgesehen ist.

12. Anordnung nach einem der Ansprüche 1 bis 11, **gekennzeichnet durch** zumindest zwei im Bezug auf die neutrale Faser (C) der Blattfeder (4) gegenüber liegend angeordnete elastische Verbindungskörper (1a..1c).

13. Anordnung nach einem der Ansprüche 1 bis 12, **gekennzeichnet durch** zumindest eine elastische Lagesicherung (12), welche im Bezug auf die neutrale Faser (C) der Blattfeder (4) gegenüber dem zumindest einen elastischen Verbindungskörper (1a..1c) angeordnet ist.

14. Kraftfahrzeug, umfassend einen Rahmen (5) und eine Blattfeder (4) zum Federn wenigstens zweier Räder (6) des Kraftfahrzeugs,
**dadurch gekennzeichnet, dass**
die Blattfeder (4) Bestandteil einer Anordnung nach einem der Ansprüche 1 bis 13 ist, deren zumindest ein elastischer Verbindungskörper (1a..1c) mit dem Fahrzeugrahmen (5) starr verbunden ist.

15. Kraftfahrzeug nach einem der Ansprüche 14 bis 15, **dadurch gekennzeichnet, dass** die Federkonstante der mit der Blattfeder (4) verbundenen elastischen Verbindungskörper (1a..1c) in Summe 200 N/mm in einer Längsrichtung des Fahrzeugs und/oder 3000 in N/mm einer Querrichtung des Fahrzeugs und/oder 1000 N/mm in vertikaler Richtung beträgt.

## Claims

1. Arrangement comprising a leaf spring (4) of a motor vehicle and an elastic connecting body (1a..1c) which is rigidly connected thereto and which comprises means for a rigid connection to a vehicle frame (5), **characterized in that** the elastic connecting body (1a..1c) has two sections (A, B) which are inclined with respect to one another and at least partially spaced apart from one another, wherein the leaf spring (4) is arranged transversely with respect to the longitudinal axis of the vehicle and is provided for the suspension of, in each case, at least one wheel (6) at, in each case, one end of the leaf spring (4).

2. Arrangement according to Claim 1, **characterized in that** the sections (A, B) of the at least one elastic connecting body (1a..1c) are inclined differently with respect to a neutral axis (C) of the leaf spring (4).

3. Arrangement according to Claim 1 or 2, **characterized in that** a pivot point (P), about which the connection of the at least one connecting body (1a..1c) to the vehicle frame (5) and the connection thereof to the leaf spring (4) are rotated during the spring action of the leaf spring (4), is arranged spaced apart from a neutral axis (C) of the leaf spring (4).

4. Arrangement according to Claim 3, **characterized in that** the pivot point (P) is arranged on the side of the neutral axis (C) of the leaf spring (4) facing the at least one connecting body (1a..1c).

5. Arrangement according to Claim 1 or 2, **characterized in that** a pivot point (P), about which the connection of the at least one connecting body (1a..1c) to the vehicle frame (5) and the connection thereof to the leaf spring (4) are rotated during the spring action of the leaf spring (4), is arranged on a neutral axis (C) of the leaf spring (4).

6. Arrangement according to one of Claims 3 to 5, **characterized in that** the torsion spring constant of an elastic connecting body (1a..1c) about an axis running through the pivot point (P) and in a transverse direction with respect to the leaf spring (4) is 5 Nm/°.

7. Arrangement according to one of Claims 1 to 6, **characterized in that** the inclined sections (A, B) of the elastic connecting body (1a..1c) are formed by the two limbs of a Y-shaped body (2a, 2c).

8. Arrangement according to one of Claims 1 to 6, **characterized in that** the inclined sections (A, B) of the elastic connecting body are formed by two separate bodies (2b, 2b') with axes which are inclined with respect to one another.

9. Arrangement according to Claim 8, **characterized in that** the separate bodies (2b, 2b') are arranged on sections of a plate-shaped carrier (3b, 9) which are inclined with respect to the leaf spring (4).

10. Arrangement according to one of Claims 1 to 9, **characterized in that**
- the elastic connecting body (1a..1c) is bonded to the leaf spring (4) or vulcanized thereon and/or
- the means for a rigid connection to the vehicle frame (5) are formed by a surface which is provided for bonding to the vehicle frame (5) or vulcanizing onto the vehicle frame (5).

11. Arrangement according to one of Claims 1 to 10, **characterized in that**
- the elastic connecting body (1a..1c) is screwed to the leaf spring (4) and/or
- the means for a rigid connection to the vehicle frame (5) is formed by a rigid plate (3a, 3b) which is rigidly connected to the inclined sections (A, B) and is provided for a screwed connection to the vehicle frame (5).

12. Arrangement according to one of Claims 1 to 11, **characterized by** at least two elastic connecting bodies (1a..1c) which are arranged opposite one another with respect to the neutral axis (C) of the leaf spring (4).

13. Arrangement according to one of Claims 1 to 12, **characterized by** at least one elastic positional securing means (12) which is arranged opposite the at least one elastic connecting body (1a..1c) with respect to the neutral axis (C) of the leaf spring (4).

14. Motor vehicle comprising a frame (5) and a leaf spring (4) for providing suspension for at least two wheels (6) of the motor vehicle,
**characterized in that**
the leaf spring (4) is a component of an arrangement according to one of Claims 1 to 13, the at least one elastic connecting body (1a..1c) of which is rigidly connected to the vehicle frame (5).

15. Motor vehicle according to one of Claims 14 to 15, **characterized in that** the spring constant of the elastic connecting bodies (1a..1c) which are connected to the leaf spring (4) is in total 200 N/mm in a longitudinal direction of the vehicle and/or 3000 in N/mm of a transverse direction of the vehicle and/or 1000 N/mm in a vertical direction.

## Revendications

1. Ensemble comprenant un ressort à lames (4) pour véhicule automobile et un corps de liaison élastique (1a...1c) qui lui est relié de manière rigide et qui comporte des moyens permettant de relier de manière rigide au châssis (5) du véhicule, **caractérisé en ce que**
le corps de liaison élastique (1a...1c) présente deux sections (A, B) inclinées l'une par rapport à l'autre et dont au moins certaines parties sont maintenues à distance l'une de l'autre, le ressort à lames (4) étant disposé transversalement par rapport à l'axe longitudinal du véhicule et étant prévu pour suspendre au moins une roue (6) à chacune des extrémités du ressort à lames (4).

2. Ensemble selon la revendication 1, **caractérisé en ce que** les sections (A, B) du ou des corps de liaison élastiques (1a...1c) sont inclinés différemment par rapport à une fibre neutre (C) du ressort à lames (4).

3. Ensemble selon les revendications 1 ou 2, **caractérisé en ce que** le centre de rotation (P) autour duquel la liaison du ou des corps de liaison élastique (1a...1c) au châssis (5) du véhicule et la liaison de ce corps au ressort à lames (4) tourne lors de l'amortissement par le ressort à lames (4) est disposé à distance d'une fibre neutre (C) du ressort à lames (4).

4. Ensemble selon la revendication 3, **caractérisé en ce que** le centre de rotation (P) est disposé sur le côté de la fibre neutre (C) du ressort à lames (4) tourné vers le ou les corps de liaison élastique (1a...1c).

5. Ensemble selon les revendications 1 ou 2, **caractérisé en ce que** le centre de rotation (P) autour duquel la liaison du ou des corps de liaison élastique (1a...1c) au châssis (5) du véhicule et la liaison de ce corps au ressort à lames (4) tourne lors de l'amortissement par le ressort à lames (4) est disposé sur une fibre neutre (C) du ressort à lames (4).

6. Ensemble selon l'une des revendications 3 à 5, **caractérisé en ce que** la constante élastique en torsion d'un corps de liaison élastique (1a...1c) autour d'un axe qui passe par le centre de rotation (P) et qui s'étend dans une direction transversale par rapport au ressort à lames (4) vaut 5 mm/°.

7. Ensemble selon l'une des revendications 1 à 6, **caractérisé en ce que** les sections inclinées (A, B) du corps de liaison élastique (1a...1c) sont formées par les deux branches d'un corps (2a, 2c) en forme de Y.

8. Ensemble selon l'une des revendications 1 à 6, **caractérisé en ce que** les sections inclinées (A, B) du corps de liaison élastique (1a...1c) sont formées par deux corps (2b, 2b') distincts dont les axes sont inclinés l'un par rapport à l'autre.

9. Ensemble selon la revendication 8, **caractérisé en ce que** les corps (2b, 2b') distincts sont disposés sur des sections d'un support (3b, 9) en forme de plaque incliné par rapport au ressort à lames (4).

10. Ensemble selon l'une des revendications 1 à 9, **caractérisé en ce que** le corps de liaison élastique (1a...1c) est collé sur le ressort à lames (4) ou est vulcanisé sur ce dernier et/ou **en ce que** les moyens permettant une liaison rigide au châssis (5) du véhicule sont formés par une surface prévue pour être collée sur le châssis (5) du véhicule ou être vulcanisée sur le châssis (5) du véhicule.

11. Ensemble selon l'une des revendications 1 à 10, **caractérisé en ce que** le corps de liaison élastique (1a...1c) est vissé sur le ressort à lames (4) et/ou **en ce que** les moyens permettant une liaison rigide au châssis (5) du véhicule sont formés par une plaque rigide (3a, 3b) qui est reliée rigidement aux sections inclinées (A, B) et prévues pour être vissées sur le châssis (5) du véhicule.

12. Ensemble selon l'une des revendications 1 à 11, **caractérisé par** au moins deux corps de liaison élastiques (1a...1c) disposés face à face par rapport à la fibre neutre (C) du ressort à lames (4).

13. Ensemble selon l'une des revendications 1 à 12, **caractérisé par** au moins un blocage élastique (12) en position disposé face au corps ou aux corps de liaison élastiques (1a...1c) par rapport à la fibre neutre (C) du ressort à lames (4).

14. Véhicule automobile comprenant un bâti (5) et un ressort à lames (4) qui assurent la suspension d'au moins deux roues (6) du véhicule automobile, **caractérisé en ce que**
le ressort à lames (4) fait partie d'un ensemble selon l'une des revendications 1 à 13 dont le ou les corps de liaison élastiques (1a...1c) sont reliés rigidement au châssis (5) du véhicule.

15. Véhicule automobile selon l'une des revendications 14 et 15, **caractérisé en ce que** la constante élastique des corps de liaison élastiques (1a...1c) reliés au ressort à lames (4) vaut en somme 200 N/mm dans le sens de la longueur du véhicule, 3000 dans N/mm une direction transversale du véhicule et/ou 1000 N/mm dans la direction verticale.
